# EUROPEAN PATENT APPLICATION

(11) **EP 4 765 929 A1**
(43) Date of publication of application: **24.06.2026**
(21) Application number: 24383408.2
(22) Date of filing: 19.12.2024
(51) Int. Cl.: H04W 24/04, H04L 41/16

(54) **METHOD, SYSTEM AND COMPUTER PROGRAM FOR ANOMALY DETECTION IN MOBILE CELLULAR NETWORKS**

(71) Applicant: Telefónica Innovación Digital, S.L., 28050 Madrid (ES)
(72) Inventor: Suárez-Varela, José, 28050 Madrid (ES); Lutu, Andra, 28050 Madrid (ES)
(74) Representative: Carlos Hernando, Borja

(57) **Abstract**

A method, system and computer program for anomaly detection in mobile cellular networks are provided. The method comprises generating a graph representation of a plurality of cells; selecting one of the cells of the graph as a target cell; obtaining monitored KPIs of connected neighboring cells of the target cell and of the target cell; predicting expected KPI values in the target cell over a predicting sliding window using the graph representation and the KPIs by a ML context-based predictor; making context-based predictions on the monitored KPIs of the target cell by training the ML context-based predictor using the predicted expected KPI values; calculating an anomaly score by comparing the predicted expected KPI values in the target cell over the predicting sliding window with actual values measured in the target cell over the same period; and determining that an anomaly occurs when the calculated anomaly score exceeds a predefined threshold.

## Description

### TECHNICAL FIELD

The present invention relates to anomaly detection methods and systems in mobile cellular networks.

### BACKGROUND OF THE INVENTION

Anomaly detection is a crucial task for network operators. It enables the identification of unusual events, some of them caused by equipment failures, sub-optimal configurations, cyberattacks, or sudden changes in the traffic workload [1, 2]. As such, it permits the early detection and troubleshooting of network issues that otherwise might remain unnoticed until they have severe impact on end-user experience. With the advent of Big Data and ML, the mobile network community is putting large efforts in developing automatic data-driven methods that can efficiently detect anomalies in the RAN [2, 3]. Also, traffic anomaly detection has been widely studied in the past [1, 2], with some popular works such as [4, 5], that apply Principal Component Analysis (PCA) to detect anomalies on network-wide traffic.

Detecting anomalies in real-world RAN deployments still remains a complex task, due to the vast amount of KPIs collected from cells, and the noisy and highly-dynamic nature of network traffic [4]. More importantly, alarms generated by anomaly detection tools are usually followed by a manual inspection from network experts, which requires a thorough analysis to determine if the anomaly pinpoints a real network issue. This makes it imperative to limit the volume of false alarms generated by anomaly detection systems, as it translates to direct OPEX savings for the operator.

### Anomaly Detection in Time Series

Some state-of-the-art anomaly detection methods rely on time-series analysis, such as ARIMA-based models, or Deep Learning models based on Recurrent Neural Networks (e.g., LSTM) [6, 7]. A common approach is to train ML models with historical KPI data of individual cells in the RAN. Then, during training these models learn the temporal dynamics of the measured signals, and afterwards can be applied to detect deviations from what the model would expect as normal. While state-of-the-art anomaly detection methods have shown good performance for some applications in the RAN, they present some shortcomings from a practical standpoint. Specifically, by looking at individual time series of network elements (e.g., cell KPIs) these models cannot determine if temporal changes were produced by external factors (e.g., user mobility between cells). For example, flash events are often interpreted as anomalies when looking at the individual cell level, as they produce large traffic peaks and abrupt changes in a variety of KPIs. However, network operators are often interested in filtering only anomalies that result from sub-optimal configurations or deficiencies in network deployments (e.g., hardware failures, interference, connection issues). This calls for developing anomaly detection methods that are orthogonal to external factors (e.g., user mobility, weather, events).

### Context-based anomaly detection for networks

Context-based anomaly detection strives to capture anomalies between elements with some type of relationship, which is often unknown beforehand. A typical case is fraud detection in banking transactions [8], where it is essential not only to analyze transactions at the customer level, but also put them in context with respect to other customers with similar profiles. In the context of RAN anomaly detection, mobility trends and other external factors cannot be captured by looking individually at the cell-level behavior, but it is typically needed to also consider the evolution of KPIs in nearby cells. In this sense, context-based anomaly detection methods allow modeling the underlying mobility patterns behind cells in a specific area and consider as normal those cases where traffic peaks are due to mobility events. As a result, context-based methods are more prone to detect only issues related to the network, such as configuration errors or equipment malfunctions.

In the literature, some methods proposing context-based anomaly detection in time series data are already known. These methods first look for sets of elements with similar past activity (i.e., the contexts) and then look for deviations of a target elements with respect to their context (i.e., the anomalies). For example, [9] tackles the problem of detecting performance anomalies on end-users in broadband networks, and [10] combines content and contextual detection methods to find anomalies in sensor monitoring data.

### Deep learning-based anomaly detection techniques

More recent approaches use Deep Learning (DL) to deal with the complexity behind the vast amount of data collected from networks. For example, in [12] the authors propose a model (DC-VAE) that combines dilated convolutional neural networks and a variational autoencoder, and apply it to detect anomalies in multivariate time series from mobile networks.

Some recent works also propose using Graph Neural Networks (GNN) for context-based anomaly detection. For example, in [13] the authors use a GNN-based autoencoder for anomaly detection in real-world mobility datasets. Likewise, in [14] they perform anomaly detection in multivariate time series from a distributed sensor network, and apply it to find anomalies in water treatment and distribution plants. GNNs are a subclass of Deep Learning models specifically designed to work on graph-structured data [15, 16], and have been successfully applied to many different fields, including chemistry, biology, or computer vision [17]. In the field of communication networks, GNNs have been applied to a variety of tasks [18], such as routing optimization [19], power control in wireless networks [20], Distributed Denial of Service (DDoS) attack detection [21], network intrusion detection [22], of traffic anomaly detection in wired networks [23].

Alternatively, in [24] the authors propose using Transformers for anomaly detection in time series. This method focuses on exploiting temporal correlations, both at the local and the global level. Likewise, the authors of [25] propose the use of Transformers for multivariate time series anomaly detection.

Below some closest patents and patent applications related to the present invention are detailed.

WO2021123416A1 [26] proposes a method for context-based anomaly detection in telecommunication networks. This method extracts user-level information and groups users by applying an (unsupervised) clustering technique. As a result, the method can be used to identify root causes behind issues in the network. It proposes the use of the Louvain method [27] for community detection and applies similarity metrics - such as Root Mean Squared Euclidean Distance - to extract user communities according to some monitored KPIs, which are structured as time series. After communities are extracted, the method identifies network elements that deviate from their own communities, which are eventually labelled as anomalies. Compared to the present invention, this method proposes a different procedure based on community detection (i.e., the Louvain method) for grouping users and eventually identifying anomalies in an unsupervised manner.

US20240171452 [28] presents a method for classifying network issues in RAN environments. It presents a similar graph representation to the one proposed in the present invention, and also the use of graph-based ML models to process cell-level data. This allows the method to include context information from neighboring cells. However, this method follows a different approach: it proposes training a model for binary classification in a supervised manner (i.e., with data from annotated network samples), and then it applies an interpretability method based on SHAP [29] to identify the cell features that contributed most to the classification of an anomalous sample. In contrast, the present invention is unsupervised and based on anomaly detection. A ML context-based predictor is trained, which is then used to detect samples that deviate from the expected data distribution, which are eventually annotated as anomalies. This enables MNOs to train the method without the need of annotated datasets, which are often costly to create and maintain, and do not cover new issues that may appear in the network.

State-of-the-art solutions for RAN anomaly detection [2, 12] do not consider the evolution of KPIs in neighboring cells, thus lacking the capability to model underlying mobility patterns and filter out anomalies due to external factors (e.g., flash crowds, sport events, concerts). In contrast, the present invention relies on context-based anomaly detection, and presents a novel architecture based on ML that allows operation teams to filter out anomalies due to external factors. As a result, the method can raise alarms over issues that are most often related to misconfiguration or failures in network equipment.

Other state-of-the-art methods, such as [3, 28] rely on supervised learning to classify potential issues in the network. However, this requires having a reliably annotated dataset with all the anomalies that are relevant to operation teams - which is not always feasible in real-world deployments - and also it does not allow discovering new issues that may appear in the network. In contrast, the present invention is unsupervised and can find new issues in the network by detecting significant deviations in the monitored cell KPIs.

Moreover, the present invention is tailored to generalize to different deployment areas after training, as long as they have similar properties (e.g., same antenna types, frequency bands, etc.). Particularly, the combination of the proposed graph representation with a Graph Neural Network-based model enables creating a robust data processing pipeline that is location-agnostic and is equivariant to some transformations in the network topology (e.g., rotations, translations, cell permutations).

New and improved method and system for anomaly detection in mobile cellular networks are therefore needed.

### DESCRIPTION OF THE INVENTION

Cellular networks are known to exhibit marked spatio-temporal patterns as a result of the mobility of users connected to the network [30, 31]. Considering this, the present invention departs from the assumption that cell-level anomalies occur when the KPIs of a cell start to deviate from those of other cells with similar past activity (i.e., the context cells). Based on this observation, the present invention performs context-based anomaly detection over a generic list of cell KPIs. Context-based methods help detect different types of anomalies often unnoticed by other methods [10]. In the context of RAN anomaly detection, this helps build a solution that can dynamically adapt to variations due to local mobility patterns (e.g., popular events in the area, weather conditions, etc.) and focus on anomalies that are independent of these external factors.

The object of the present invention is to provide a new solution based on graph representations for anomaly detection in mobile cellular networks, particularly focusing on the detection of anomalies that are related to network issues, such as misconfigurations, or hardware failures.

This object is fulfilled by a method with the characteristics of claim 1 and by a system and computer program with the features of claims 14 and 15.

The present invention proposes, according to one aspect, a method for anomaly detection in mobile cellular networks. The method comprises performing by one or more processors the following steps: generating a graph representation of a plurality of cells of a mobile cellular network (e.g. a RAN), where each cell of the plurality of cells represents a node in the graph representation and nodes are connected by edges according to a predefined criteria; selecting one of the cells of the graph as a target cell; obtaining monitored key performance indicators, KPIs, of connected neighboring cells of the target cell got over a past time sliding window and a prediction sliding window and obtaining monitored KPIs of the target cell got over the past time sliding window; predicting expected KPI values in the target cell over the predicting sliding window using the generated graph representation and the obtained monitored KPIs of the connected neighboring cells and of the target cell by a machine learning, ML, context-based predictor; making context-based predictions on the monitored KPIs of the target cell by training the ML context-based predictor using the predicted expected KPI values in the target cell over the predicting sliding window; calculating an anomaly score by comparing the predicted expected KPI values in the target cell over the predicting sliding window with actual values measured in the target cell over the same period; and determining that an anomaly occurs when the calculated anomaly score exceeds a predefined detection threshold.

In some embodiments, the method also comprises providing an alarm or an anomaly report if it is determined that an anomaly has occurred.

In some embodiments, the ML context-based predictor comprises a graph neural network such as a message-passing neural network, a graph attention network, a GraphSAGE or a transformer, among others.

In some embodiments, the ML context-based predictor is trained in a self-supervised manner.

In some embodiments, the ML context-based predictor comprises an auto-regressive model.

In some embodiments, the ML context-based predictor model further uses loss functions, for example, a Mean Square Error, a Mean Absolute Error, and a Mean Relative Error, among others.

In some embodiments, the prediction of the expected KPI values in the target cell over the predicting sliding window further comprises associating weights to the connected neighboring cells based on the past time sliding window, making the predictions based on the associated weights, and considering an evolution of the KPIs in the connected neighboring cells during the prediction sliding window.

In some embodiments, the ML context-based predictor further calculates confidence intervals along with the predicted expected KPI values by executing a mechanism based on variational inference.

In some embodiments, the calculation of the anomaly score further comprises using error metrics between the predicted expected KPI values and the actual measured values. Alternatively, it comprises using a dynamic score function that considers accumulated errors from previous calculations.

In some embodiments, the KPIs are monitored in real-time at a cell level.

The KPIs can include any of: utilization data of the cell, the number of active users, a user average throughput, the total data rate, a packet loss value, among others.

In some embodiments, the edges of the generated graph further include spatial or geometrical information related to the connected nodes including at least one of: a distance between the cells, an angle representing a relative orientation between the cells, and/or a flag indicating that two cells belong to a same sector, such that the predefined criteria comprises a minimum distance criteria, an antenna type criteria, and/or an orientation criteria.

In some embodiments, each node in the graph representation further includes cell equipment features and/or a frequency band where the cell operates.

Other aspects of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Consequently, the present invention leverages a graph representation that integrates KPIs monitored from a set of antennas or transmitters (referred as cells). In this representation, cells may be connected to each other based on multiple criteria (e.g., closest cells by distance, antenna type, etc.). This graph representation allows efficient training of graph-based ML models for robust anomaly detection in the network. After training, the method can calibrate automatically anomaly detections based on the behavior of other cells connected in the graph representation. This enables creating ML models that are robust to the spatio-temporal variations of KPIs in mobile networks and - as a result - it helps filter out anomalies produced by external mobility factors. Hence, the present invention focuses on detecting network-related anomalies (e.g., misconfigurations, equipment failures). Moreover, the proposed ML-based method is robust to data distribution shifts and generalizes to other deployment areas not seen during the training phase.

The method allows Mobile Network Operators (MNOs) to detect anomalies at the antenna/transmitter level, by collecting and processing data from the mobile cellular network monitoring platform.

The present invention represents a cost-effective solution for mobile cellular network anomaly detection. Operation teams can train the method over KPIs at the cell level, from a specific area, and then use it for anomaly detection in other areas where the deployment has similar properties (e.g., same frequency bands, antenna kits, deployment density). This can help further reduce OPEX compared to previous ML-based methods, which typically require training and maintaining different models for specific cells, or group of cells.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:
Fig. 1 schematically illustrates the architecture of the present invention, according to an embodiment.
Fig. 2 schematically illustrates an embodiment of the graph data representation proposed by the present invention.

### DETAILED DESCRIPTION OF THE INVENTION AND OF PREFERRED EMBODIMENTS

The present invention relies on the use of graphs to properly represent cells of a mobile cellular network (e.g. a RAN deployment) and combine them with the use of graph-based ML models to process such information in an effective manner. Particularly, models from the family of Graph Neural Networks are well-suited for encoding and modeling relationships between different elements distributed in the network [18]. As a result, they offer beneficial properties for context-based anomaly detection in the RAN. This feature makes the proposed method complementary to previous anomaly detection solutions based on time series analysis on individual cells [21]. Moreover, by exploiting spatio-temporal correlations in the neighborhood, the present invention can dynamically adapt to distribution shifts, and consequently is more robust to external changes (e.g., change in mobility trends). This is a beneficial property towards building generic anomaly detection models that can be applied to other deployment areas, or to new cells deployed in the same area, without the need of re-training. Ultimately, this also opens the opportunity to build a limited set of ML models that can be trained on specific trial areas and then be deployed in production over the entire MNO's mobile cellular network.

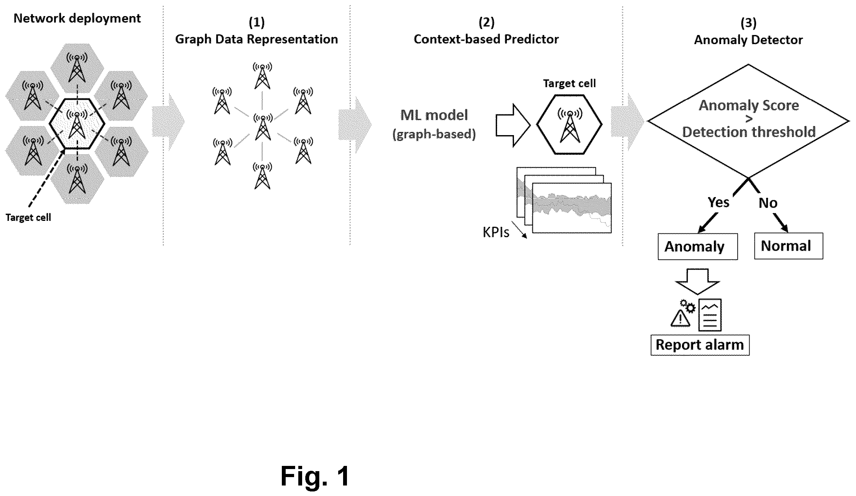

Fig. 1 shows an embodiment of the present invention, which in this case is divided into three main components: (1) graph data representation, (2) context-based predictor, and (3) anomaly detection. The following subsections describe further details of these different modules/components.

### Graph Data Representation

The present invention generates a graph representation of a plurality of cells of a mobile cellular network (e.g. a RAN) where each cell - or radio sector - represents a node in the graph, and nodes (i.e., cells) are connected by edges according to some pre-defined criteria (e.g., cells within a specific distance, k nearest cells). Graph edges define the potential relationships between cells, hence limiting the set of cells that may be considered in the context of each cell. In a generic RAN scenario, cell sites may include more than one cell or radio sector, which are represented as independent nodes in the graph.

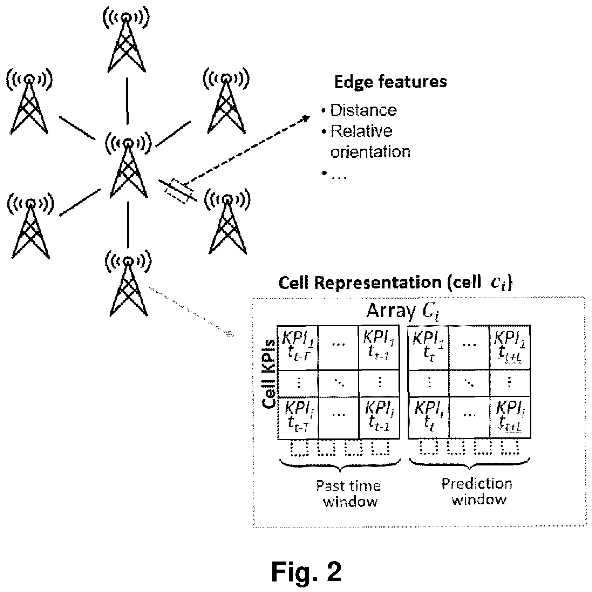

Fig. 2 illustrates an embodiment of the graph data representation proposed in the present invention. The method builds a graph sample by taking a target cell as a reference and getting the monitored KPIs over a sliding window. Particularly, the sliding window is divided into two main periods: (i) the past time window [**t_{t-T}**, ... , **t**_{**t**-**1**}], and (ii) the prediction window [**tₜ**, ... , **t_{t+L}**], which is used later by the context-based predictor.

Formally, a graph 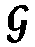 = ( 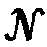 , *ε*) is generated, where 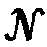 are the graph nodes, which represent the set of cells, and *ε* are the graph edges, which connect the target cell with the neighboring cells. Each cell ***cᵢ*** ∈ 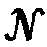 can be represented by an array ***cᵢ*** ∈ ***R***^{(***M***× (***T**+**L**+***1**))}, where M is the number of monitored KPIs for the cell, and ***(T*** + ***L*** + 1) is the size of the sliding window used for the anomaly detection method. Hence, the array ***Cᵢ*** includes the time series of the KPIs for the cell ***cᵢ*** during the period [***t***_{***t***-***T***}, ... , ***t***_{***t***+***L***}], That includes the past and prediction time windows.

Additionally, in some embodiments, graph edges *ε* may include some spatial or geometric information related to the connected cells, such as the distance, angles representing the relative orientation between the cells, or flags indicating if two cells belong to the same site or sector. Preferably, spatial and geometric features should be relative to each other; e.g., distance instead of coordinates, and relative orientation instead of azimuth and tilt of the antennas. This helps the context-based predictor - which is based on ML- to learn location-agnostic patterns and improve its generalization capability to different cell layouts (e.g., in other deployment areas).

### Context-based Predictor

The objective is to make predictions of the monitored KPIs considering the cells connected in the graph representation. Particularly, this module gets the monitored KPIs of the neighboring cells over the entire period [***t***_{***t***-***T***}, ..., ***t**_{**t**+**L**}*], as well as the KPIs of the target cell only over the past time window [***t***_{***t***-***T***}, ... , ***t***_{***t***-**1**}]*.* As a result, it predicts the expected KPI values in the target cell over the prediction window [***tₜ***, ... , ***t***_{***t***+***L***}]. To this end, the present invention uses the Graph Data Representation described above and trains the ML context-based predictor, which can be based on an auto-regressive model, that learns the expected evolution of KPIs in the target cell over the prediction window (i.e., self-supervised training). For this, in some embodiments, common loss functions for regression problems can be used, such as the Mean Squared Error, Mean Absolute Error, or Mean relative Error, among others.

During training, the model learns how to make context-based predictions on the KPIs of the target cell. For this, it has access to the evolution of KPIs in the neighboring cells during the entire period (i.e., past + prediction window [***t***_{***t***-***T***}, ... , ***t***_{***t***+***L***}]). This allows the model to calibrate the target cell predictions based on the past similarity of the context cells and the evolution of their KPIs during the prediction window. As a result, the anomaly detection method can dynamically adapt to abrupt changes due to spatio-temporal phenomena in the area (e.g., unexpected mobility events).

### Anomaly Detection

In this phase, an anomaly score is computed, after comparing the expected KPI values produced by the ML context-based predictor - over the prediction window [***tₜ***, ... , ***t***_{***t***+***L***}] *-* with actual values measured in the target cell over the same period. This enables the method to determine if there is a significant deviation that can be considered anomalous. If the anomaly score exceeds a pre-defined detection threshold, an anomaly report or alarm can be raised to a mobile cellular network monitoring platform or the like, for example, to a computer device.

The computation of the anomaly score generally involves a careful fine-tuning process considering the anomalies reported, as well as some potential feedback from operation teams. In the present invention, it is considered a configurable element.

With regard to the datasets that can be used by the proposed method, the following includes a collection of data feeds that may be especially relevant to train and evaluate the proposed invention:
1) Network topology: This data feed includes information from all cells deployed in the network, at the individual antenna level, including location information (lat/long coordinates, orientation, antenna type) and some basic configuration parameters of the deployed antennas (e.g., antenna model, frequency band, transmit power, beamwidth).
2) Cell-level KPIs: This data feed contains time series of KPIs monitored at the cell level (e.g., utilization, number of active users, user average throughput, total data rate, packet loss). These time series can be collected at different time granularities (e.g., every 15 minutes, 1 hour, etc.).

The proposed invention can include additional features that enhance the functionality of its various phases/modules.

The graph data representation can be enriched by extending the cell-level information encoded in the array ***Cᵢ*** to include features related to the cell equipment. These features may encompass details such as the antenna model, the vendor, or the frequency band in which the equipment operates.

Context-based predictor leverages advanced ML models to enhance its predictive capabilities. While the choice of the ML model remains a design decision, the proposed method benefits from the use of Deep Learning architectures tailored for graph-structured data, such as Graph Neural Networks (e.g., Message-Passing Neural Networks [32], Graph Attention Networks [33], GraphSAGE [34]) or Transformers [35]. These models introduce inductive biases, enabling them to recognize meaningful patterns within the graph data. By doing so, they generalize structural knowledge gained from training graphs and apply it effectively to new graphs with different configurations of nodes and edges. Furthermore, integrating self-attention mechanisms, as seen in Graph Attention Networks or Transformers, enhances model interpretability. For example, attention scores can identify the cells and KPIs most relevant to a target cell's context

The ML model behind the context-based predictor can be divided in two phases: the first one to compute the context of the target cell, e.g., associating weights to neighboring cells based on the past time window [*t*_{*t*-*T*}, ... , *t*_{*t*-1}]; then, the second phase would focus on making predictions based on the pre-computed cell weights and considering the evolution of KPIs in the neighboring cells during the prediction window [*tₜ*, ... , *t*_{*t*+*L*}]. This helps the model to divide the problem in two sub-tasks: first computing the target cell's context, and then make the predictions based on the evolution of the context. For the first phase, models with self-attention mechanisms can be used, such as those of Graph Attention Networks or Transformers, which can directly associate a weight to each pair of cells in the graph.

Additionally, the ML model can implement mechanisms based on variational inference to provide confidence intervals along with the predicted values.

Anomaly Detection can be enhanced by incorporating flexible and dynamic error metrics. The computation of anomaly scores can use traditional metrics, such as the Mean Absolute Error between predicted and actual values, or dynamic score functions that consider accumulated errors over time. If the context-based predictor generates confidence intervals, the anomaly detector can utilize these intervals to adjust and calibrate the anomaly scores, ensuring a more robust detection mechanism.

Some of the advantages of the present invention can be summarized as follows:
- Context-based anomalies: The method considers the evolution of KPIs in neighboring cells. As a result, it detects anomalies that are independent of external mobility factors and focuses specifically on anomalies related to networks issues, such as misconfigurations and failures on network equipment.
- Early detection: The method can perform real-time monitoring of KPIs at the cell level. Hence, it can help to detect issues in the network at an early stage, before they have a relevant impact on the customers' Quality of Experience.
- Robust and cheap to maintain: With the proposed method, a single ML model can be trained over a trial area, and then be deployed over larger deployment areas. Moreover, since the same model learns from the collective experience of different cells in the mobile cellular network, it is particularly robust to changes in the data distribution and the network topology, which ultimately reduces the need for frequent re-training of the model. This is mainly thanks to the capability of the method to calibrate its detections based on the cell's context (i.e., considering the evolution of KPIs in neighboring cells). In contrast, most existing ML-based methods require training one model per cell and need to be frequently re-trained to adapt to data distribution shifts.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

### References

[1] M. Ahmed, A. N. Mahmood, and J. Hu, "A survey of network anomaly detection techniques," Journal of Network and Computer Applications, vol. 60, pp. 19-31, 2016.
[2] M. H. Bhuyan, D. K. Bhattacharyya, and J. K. Kalita, "Network anomaly detection: methods, systems and tools," IEEE communications surveys & tutorials, vol. 16, no. 1, pp. 303-336, 2013.
[3] A. P. Iyer, L. E. Li, and I. Stoica, "Automating diagnosis of cellular radio access network problems," in Proceedings of International Conference on Mobile Computing and Networking, pp. 79-87, 2017.
[4] S. Liu, Y. Chen, W. Trappe, and L. J. Greenstein, "Aldo: An anomaly detection framework for dynamic spectrum access networks," in IEEE INFOCOM, pp. 675-683, 2009.
[5] A. Lakhina, M. Crovella, and C. Diot, "Diagnosing network-wide traffic anomalies," ACM SIGCOMM computer communication review, vol. 34, no. 4, pp. 219-230, 2004.
[6] Y. Zhang, Z. Ge, A. Greenberg, and M. Roughan, "Network anomography," in Proceedings of the ACM SIGCOMM conference on Internet Measurement, pp. 30-30, 2005.
[7] W. Jiang, "Cellular traffic prediction with machine learning: A survey," Expert Systems with Applications, vol. 201, p. 117163, 2022.
[8] B. Ma, W. Guo, and J. Zhang, "A survey of online data-driven proactive 5g network optimization using machine learning," IEEE access, vol. 8, pp. 35606-35637, 2020
[9] Hilal W, Gadsden SA, Yawney J. Financial fraud: a review of anomaly detection techniques and recent advances. Expert systems With applications. 2022 May 1;193:116429.
[10] G. Dimopoulos, P. Barlet-Ros, C. Dovrolis, and I. Leontiadis, "Detecting network performance anomalies with contextual anomaly detection," in IEEE International Workshop on Measurement and Networking (M&N), pp. 1-6, 2017.
[11] M. A. Hayes and M. A. Capretz, "Contextual anomaly detection in big sensor data," in IEEE International Congress on Big Data, pp. 64-71, 2014.
[12] G. G. González, S. M. Tagliafico, A. F. lie-Fing, G. Gómez, J. Acuña, and P. Casas, "DC-VAE, fine-grained anomaly detection in multivariate time-series with dilated convolutions and variational auto encoders," in IEEE European Symposium on Security and Privacy Workshops (EuroS&PW), pp. 287-293, 2022.
[13] Y. Hu, A. Qu, and D. Work, "Graph convolutional networks for traffic anomaly," arXiv preprint arXiv:2012.13637, 2020.
[14] A. Deng and B. Hooi, "Graph neural network-based anomaly detection in multivariate time series," in Proceedings of the AAAI conference on artificial intelligence, vol. 35, pp. 4027-4035, 2021.
[15] F. Scarselli, M. Gori, A. C. Tsoi, M. Hagenbuchner, and G. Monfardini, "The graph neural network model," IEEE transactions on neural networks, vol. 20, no. 1, pp. 61-80, 2008.
[16] P. W. Battaglia, J. B. Hamrick, et al., "Relational inductive biases, deep learning, and graph networks," arXiv preprint arXiv:1806.01261, 2018.
[17] J. Zhou, G. Cui, S. Hu, Z. Zhang, et al., "Graph neural networks: A review of methods and applications," Al open, vol. 1, pp. 57-81, 2020.
[18] J. Suárez-Varela, P. Almasan, M. Ferriol-Galmés, K. Rusek, F. Geyer, X. Cheng, X. Shi, S. Xiao, F. Scarselli, A. Cabellos-Aparicio, et al., "Graph neural networks for communication networks: Context, use cases and opportunities," IEEE network, 2022.
[19] K. Rusek, J. Suárez-Varela, A. Mestres, P. Barlet-Ros, and A. Cabellos-Aparicio, "Unveiling the potential of graph neural networks for network modeling and optimization in sdn," in Proceedings of the 2019 ACM Symposium on SDN Research, pp. 140-151, 2019.
[20] Y. Shen, Y. Shi, J. Zhang, and K. B. Letaief, "Graph neural networks for scalable radio resource management: Architecture design and theoretical analysis," IEEE Journal on Selected Areas in Communications, vol. 39, no. 1, pp. 101-115, 2020.
[21] Y. Li, R. Li, Z. Zhou, J. Guo, W. Yang, M. Du, and Q. Liu, "GraphDDoS: Effective ddos attack detection using graph neural networks," in 2022 IEEE 25th International Conference on Computer Supported Cooperative Work in Design (CSCWD), pp. 1275-1280, IEEE, 2022.
[22] D. Pujol-Perich, J. Suárez-Varela, A. Cabellos-Aparicio, and P. Barlet-Ros, "Unveiling the potential of graph neural networks for robust intrusion detection," ACM SIGMETRICS Performance Evaluation Review, vol. 49, no. 4, pp. 111-117, 2022.
[23] H. Latif, J. Suárez-Varela, A. Cabellos-Aparicio, and P. Barlet-Ros, "Detecting Contextual Network Anomalies with Graph Neural Networks," In Proceedings of ACM CoNEXT Graph Neural Networking Workshop, pp. 25-30, 2023.
[24] J. Xu, H. Wu, J. Wang, and M. Long, "Anomaly transformer: Time series anomaly detection with association discrepancy," arXiv preprint arXiv:2110.02642, 2021.
[25] S. Tuli, G. Casale, and N. R. Jennings, "TranAD: Deep transformer networks for anomaly detection in multivariate time series data," arXiv preprint arXiv:2201.07284, 2022.
[26] Telefonica Digital España S.L.U. (2021). Method for detecting anomalies in mobile telecommunication networks (WO2021123416A1).
[27] V.D. Blondel, J.L. Guillaume, R. Lambiotte, and E. Lefebvre, "Fast unfolding of communities in large networks," Journal of statistical mechanics: theory and experiment, 2008.
[28] Telefonaktiebolaget LM Ericsson (2024). Automated Root Cause Analysis of Network Issues in a Cellular Network using Machine Learning (US20240171452)
[29] S. M. Lundberg, and S. I. Lee, "A unified approach to interpreting model predictions," Proceedings of the International Conference on Neural Information Processing Systems (NeurIPS), 2017.
[30] X. Wang, Z. Zhou, F. Xiao, K. Xing, Z. Yang, Y. Liu, C. Peng, "Spatio-temporal analysis and prediction of cellular traffic in metropolis," IEEE Transactions on Mobile Computing, 2018.
[31] C. Zhang, P. Patras, "Long-term mobile traffic forecasting using deep spatio-temporal neural networks," ACM International Symposium on Mobile Ad Hoc Networking and Computing, 2018.
[32] J. Gilmer, S. S. Schoenholz, P.F. Riley, O. Vinyals, and G.E. Dahl, "Message passing neural networks," Machine learning meets quantum physics, 2020.
[33] P. Veličković, G. Cucurull, A. Casanova, A. Romero, P. Lio, and Y. Bengio, "Graph attention networks," International Conference on Learning Representations (ICLR), 2018.
[34] W. Hamilton, Z. Ying, and J. Leskovec, "Inductive representation learning on large graphs. Advances in neural information processing systems," 2017.
[35] A. Vaswani, N. Shazeer, N. Parmar, J. Uszkoreit, L. Jones, A. N. Gomez, L. Kaiser, and I. Polosukhin, "Attention is all you need," Advances in Neural Information Processing Systems, 2017.

## Claims

1. A method for anomaly detection in mobile cellular networks, the method comprising performing by one or more processors the following steps:
generating a graph representation of a plurality of cells of a mobile cellular network, where each cell of the plurality of cells represents a node in the graph representation and nodes are connected by edges according to a predefined criteria;
selecting one of the cells of the graph as a target cell;
obtaining monitored key performance indicators, KPIs, of connected neighboring cells of the target cell got over a past time sliding window and a prediction sliding window and obtaining monitored KPIs of the target cell got over the past time sliding window;
predicting expected KPI values in the target cell over the predicting sliding window using the generated graph representation and the obtained monitored KPIs of the connected neighboring cells and of the target cell by a machine learning, ML, context-based predictor;
making context-based predictions on the monitored KPIs of the target cell by training the ML context-based predictor using the predicted expected KPI values in the target cell over the predicting sliding window;
calculating an anomaly score by comparing the predicted expected KPI values in the target cell over the predicting sliding window with actual values measured in the target cell over the same period; and
determining that an anomaly occurs when the calculated anomaly score exceeds a predefined detection threshold.

2. The method of claim 1, further comprising providing an alarm or an anomaly report if it is determined that an anomaly has occurred.

3. The method of any one of the previous claims, wherein the ML context-based predictor comprises a graph neural network including a message-passing neural network, a graph attention network, a GraphSAGE or a transformer.

4. The method of any one of the previous claims, wherein the ML context-based predictor is trained in a self-supervised manner and/or comprises an auto-regressive model.

5. The method of claim 4, wherein the ML context-based predictor model further comprises using loss functions including at least one of: a Mean Square Error, a Mean Absolute Error, and a Mean Relative Error.

6. The method of any one of the previous claims, wherein the prediction of the expected KPI values in the target cell over the predicting sliding window further comprises:
associating weights to the connected neighboring cells based on the past time sliding window; and
making the predictions based on the associated weights and considering an evolution of the KPIs in the connected neighboring cells during the prediction sliding window.

7. The method of any one of the previous claims, wherein the ML context-based predictor further comprises computing confidence intervals along with the predicted expected KPI values by executing a mechanism based on variational inference.

8. The method of any one of the previous claims, wherein the calculation of the anomaly score further comprises using:
error metrics between the predicted expected KPI values and the actual measured values; or
a dynamic score function that considers accumulated errors from previous calculations.

9. The method of any one of the previous claims, wherein the KPIs are monitored in real-time at a cell level.

10. The method of any one of the previous claims, wherein the KPIs include utilization data of the cell, a number of active users, a user average throughput, a total data rate, and/or a packet loss value.

11. The method of any one of the previous claims, wherein the edges of the generated graph further include spatial or geometrical information related to the connected nodes including at least one of: a distance between the cells, an angle representing a relative orientation between the cells, and/or a flag indicating that two cells belong to a same sector, such that the predefined criteria comprises a minimum distance criteria, an antenna type criteria, and/or an orientation criteria.

12. The method of any one of the previous claims, wherein each node in the graph representation further includes cell equipment features and/or a frequency band where the cell operates.

13. The method of any one of the previous claims, wherein the mobile cellular network comprises a Radio Access Network, RAN.

14. A system for anomaly detection in cellular networks, comprising a memory and at least one processor, wherein the at least one processor is configured to:
generate a graph representation of a plurality of cells of a mobile cellular network, where each cell of the plurality of cells represents a node in the graph representation and nodes are connected by edges according to a predefined criteria;
select one of the cells of the graph as a target cell;
obtain monitored key performance indicators, KPIs, of connected neighboring cells of the target cell got over a past time sliding window and a prediction sliding window and obtain monitored KPIs of the target cell got over the past time sliding window;
predict expected KPI values in the target cell over the predicting sliding window using the generated graph representation and the obtained monitored KPIs of the connected neighboring cells and of the target cell by a machine learning, ML, context-based predictor;
make context-based predictions on the monitored KPIs of the target cell by training the ML context-based predictor using the predicted expected KPI values in the target cell over the predicting sliding window;
calculate an anomaly score by comparing the predicted expected KPI values in the target cell over the predicting sliding window with actual values measured in the target cell over the same period; and
determine that an anomaly occurs when the calculated anomaly score exceeds a predefined detection threshold.

15. A non-transitory computer readable medium including code instructions that when executed in a computer system implement the steps of the method of any one of the claim 1 to 13.
